# EUROPÄISCHE PATENTSCHRIFT

(11) **EP 3 124 206 B1**
(45) Veröffentlichungstag und Bekanntmachung des Hinweises auf die Patenterteilung: **26.08.2020**
(21) Anmeldenummer: 16001647.3
(22) Anmeldetag: 27.07.2016
(51) Int. Cl.: B29C 55/18

(54) **DICHTUNGSSTREIFEN AUS PTFE**
WEATHER STRIPS MADE FROM PTFE
BANDES D'ÉTANCHÉITÉ EN PTFE

(30) Priorität: 29.07.2015 AT 5062015
(43) Veröffentlichungstag der Anmeldung: 01.02.2017
(73) Patentinhaber: Bachmair, Josef, 4841 Ungenach (AT); Seiringer, Josef, 4841 Ungenach (AT)
(72) Erfinder: Bachmair, Josef, 4841 Ungenach (AT); Seiringer, Josef, 4841 Ungenach (AT)

(56) Entgegenhaltungen:
- WO-A1-96/07842
- WO-A1-2004/113050

## Beschreibung

Die Erfindung betrifft ein Verfahren zur Herstellung eines flexiblen länglichen Dichtungsstreifens aus PTFE für das Abdichten von Gewindeverbindungen.

Schon 1961 wurde mit durch die US 3002770 A öffentlich vorgeschlagen, als dichtende Zwischenlage zwischen Schrauben- und Mutterngewinde bei Rohrverbindungen ein Band aus PTFE (Polytetrafluorethylen) zu verwenden. Für die Herstellung des Bandes wird pulverförmiges PTFE:mit einem kleinen Anteil eines öligen Zusatzes vermengt, extrudiert und auf einem Kalanderwalzgerüst zu einem langen, dünnen Band ausgewalzt und schließlich aufgewickelt. Auf dem Kalanderwalzgerüst wird das Band so gestreckt, dass sein spezifisches Gewicht bei 1,2 bis 1,8 g/mm³ zu liegen kommt. (PTFE-Körper, welche durch Zusammendrücken und Kneten von PTFE-Pulver gebildet sind, haben die Eigenheit, dass sie beim Fließen zufolge Zugspannung nicht nur die Form ändern, sondern auch porös werden und somit ihre Dichte verringern.). Für das Anwenden des Bandes zum Dichten wird dieses am Schraubengewinde angesetzt und unter Aufrechterhaltung von Zugspannung so um das Schraubengewinde herumgewickelt, dass sich Längsbereiche des Bandes in der am Schraubengewinde gebildeten Wicklung überlappen und aneinander anliegende Wicklungslagen zumindest geringfügig aneinander haften. : Auf das umwickelte Schraubengewinde (typischerweise ist es an der Au-ßenseite der Mantelfläche eines Rohrendes) wird der daran anzuschließende Teil mit einem an ihm angebrachten Mutterngewinde aufgeschraubt. Bestimmungsgemäß dichtet das Dichtband den Spalt zwischen Schrauben- und Mutterngewinde ab und es wirkt auch als Gleitschicht beim Vorgang des Schraubens.

Gegenüber dem Verbund aus Hanffasern und einer Gleitcreme als Dichtmittel ist PTFE als Dichtmittel vorteilhaft, weil es über Jahrzehnte chemisch stabil ist, damit keine Stoffe an das in einer damit gedichteten . Rohrleitung transportierte Medium abgibt, und weil auch die Gleitwirkung über Jahrzehnte aufrecht bleibt, sodass die damit abgedichteten Gewindeverbindungen auch nach Jahrzehnten noch beschädigungsfrei gelöst werden können.

Als wesentlichster Nachteil des Dichtbandes gemäß der US 3002770 A hat sich erwiesen, dass die damit hergestellte Verbindung vor allem dann nicht (ausreichend) dicht ist, wenn Schraubengewinde und Mutterngewinde nicht nur ineinander geschraubt werden, sondern auch einmal kurz in entgegengesetzte Richtung geschraubt werden - wie es für das Einjustieren von Teilen von Rohrleitungen fast immer erforderlich ist.

Die CH 544127 A beschreibt ein Dichtband, welches in Anwendung, Herstellung und Nachteilen jenem der US 3002770 A sehr ähnlich ist. Bestimmungsgemäß ist es mehr gestreckt als das Dichtband gemäß der US 3002770 A, sodass es etwas geringere Dichte hat. Damit ist das handwerkliche Arbeiten beim Herstellen einer dichtenden Gewindeverbindung vielleicht etwas einfacher, weil das Band weicher ist und sich deswegen etwas besser an die Gewindefurchen anschmiegt. Rückdrehen von zusammengeschraubten Teilen ist aber auch nicht möglich, weil damit die Dichtheit nicht mehr gesichert ist.

Die DE 10 2006 023 729 B3 beschreibt einen Gewindedichtfaden aus PTFE. Er ist gebildet indem ein Band, welches gemäß den zuvor beschriebenen Verfahren hergestellt worden ist, zu mehreren Schichten oder Teilsträngen zusammengefaltet oder verdrillt oder geflochten wird, sodass ein Faden entsteht, dessen Querschnittsfläche eine Mehrzahl von ganz oder fast ganz getrennten Teilflächen aufweist. Zudem ist der Faden mit einem Gleitmittel benetzt. Der Faden ist als Dichtmittel besser als die Dichtbänder gemäß den davor erwähnten Schriften. Er ist aber auch teurer in der Herstellung und das erforderliche Gleitmittel wird auch oft als nachteilig empfunden.

Die EP 1 802 906 B1 beschreibt einen Dichtfaden aus PTFE für das Abdichten von Rohrverbindungen. Der Faden besteht nur aus einem einzigen Filament mit rechteckiger Querschnittsfläche; diese ist maximal 2mm mal 3mm. Die Dichte den Materials ist sehr niedrig (zwischen 0,7 und 1,1 g/mm³) sodass der Faden plastisch sehr gut verformbar ist. Für das Dichter, wird er gemeinsam mit einem flüssigen Gleitmittel angewendet. Die Handhabung dieses Dichtfadens wird als nicht sehr komfortabel empfunden. Dass dabei immer auch ein Gleitmittel verwendet werden muss, wird auch als Nachteil empfunden.

Die WO 96/07842 A1 beschreibt ein Dichtmaterial auf PTFE-Basis, welches nicht für Gewindedichtungen vorgesehen ist, sondern dafür, zwischen den einander zugewandten, typischerweise ebenen Stirnflächen von zwei Rohrflanschen angeordnet zu werden. Das Dichtmaterial ist ein fadenförmiges Langmaterial aus PTFE. Es wird gebildet, indem gewalztes Flachmaterial um eine Achse, welche in der Ebene des Flachmaterials um etwa 45° zur Walzrichtung verschwenkt ist, aufgewickelt wird, sodass ein Rundfaden gebildet wird, an dessen Mantelfläche eine Seitenkante des zu Grunde liegenden Bandes eine Art Gewindespirale mit sehr hoher Steigung bildet. Gegenüber der Längsrichtung des zu Grunde liegenden Flachmaterials liegt die Längsrichtung des Rundfadens im Winkel von etwa 45°.

Die WO 2004/113050 A1 beschreibt ein Herstellungsverfahren für Zahnseide auf PTFE-Basis. Dabei werden zwei unterschiedliche Materialgemische, die beide jeweils aus PTFE und einem beigemengten Stoff bestehen, koextrudiert, sodass sich ein Faden bildet, der bezüglich Materialzusammensetzung zwei voneinander unterschiedliche Querschnittsbereiche aufweist.

Allen bisher beschriebenen Dichtmitteln für Gewindeverbindungen gemeinsam ist, dass sie aus PTFE bestehen, dass sie durch plastische Verformung wie Extrusion und/oder Walzen gebildet sind und dass sie länglich sind, wobei ihre Längsrichtung parallel zur Hauptverformungsrichtung bei der Herstellung (Extrusion, Walzen, Strocken) ist.

Nachteilig an den bekannten, besprochenen Dichtmitteln ist, dass sie entweder in der Dichtwirkung zu wünschen übrig lassen, oder dass sie den Zusatz eines (flüssigen) Gleitmittels zwingend erfordern.

Die der Erfindung zu Grunde liogende Aufgabenstellung besteht demgegenüber darin, ein Dichtmittel aus PTFE für Gewindeverbindungen bereitzustellen, welches komfortabel zu verarbeiten ist, verlässlich auch dann dichtet, wenn die Gewindeverbindung einmal auch wieder etwas in öffnunggrichtung geschraubt wird, und welches dennoch keinen Gleitmittelauftrag erfordert.

Für das Lösen der Aufgabenstellung wird davon ausgegangen, dass das Dichtmittel ein flexibler, länglicher Streifen aus zu Folie gewalztem PTFE ist, welcher bestimmungsgemäß zur Bildung einer Gewindedichtung in seiner Längsrichtung durch Zugkraft plastisch gedehnt wird und unter Aufrechterhaltung von Zugspannung in Umfangsrichtung des Gewindes um das Schraubengewinde gewickelt wird, sodass sich Längsbereiche des Gewindestreifens überlappen.

Im Unterschied zu herkömmlichen, als gewalzte PTFE-Folie ausgebildeten Dichtmitteln wird vorgeschlagen, die Längsrichtung des länglichen Streifens nicht parallel zur Walzrichtung bei der Herstellung der Folie aus der der Streifen besteht, auszurichten, sondern in der Folienebene normal dazu.

Überraschenderweise hat der so gebildete Streifen beste Eigenschaften für die Anwendung als streifenförmiges, längliches Gewindedichtmittel.

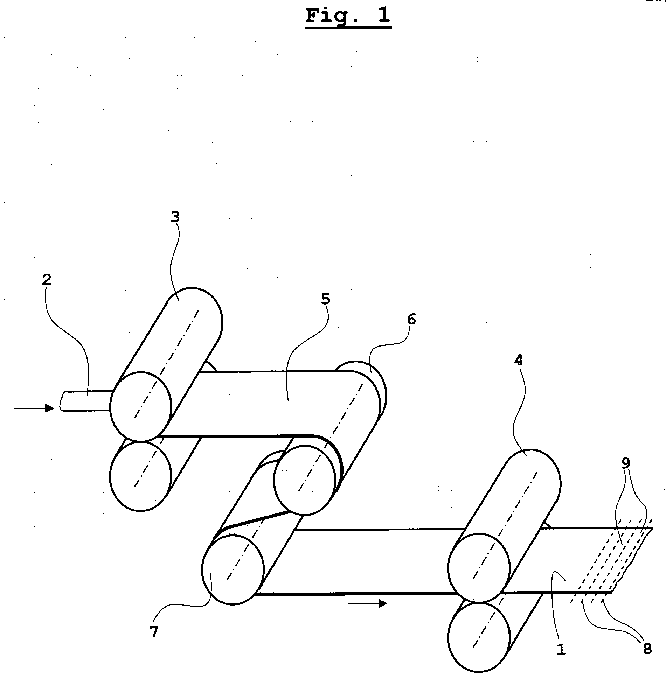

- Fig. 1: - veranschaulicht stark stilisiert ein beispielhaftes Herstellungsverfahren für einen beispielhaften erfindungsgemäßen Dichtungsstreifen. Die Pfeile zeigen die Bewegungsrichtung des verarbeiteten Materials.

Gemäß Fig. 1 wird zur Herstellung einer Folie 1 aus PTFE auf einem Kalanderwalzgerüst der - üblicherweise durch Extrusion eines PTFE-Polymers gewonnene - ursprüngliche Strang 2 im Spalt zwischen den beiden Walzen von Walzenpaaren 3, 4 durch Druck verformt. Im Längsbereich zwischen in Bewegungsrichtung des teilverarbeiteten Strangs 5 voneinander beabstandeten Walzenpaaren 3, 4 oder Rollen 6, 7 kann der Strang auch etwas gereckt, also durch Zugspannung plastisch gedehnt werden, wobei die Richtung der Zugspannung und der dadurch verursachten plastischen Verformung parallel zur Walzrichtung des Stranges 5 liegt.

Versuche haben gezeigt, dass die so gewonnene Folie 1 bezüglich plastischer Verformbarkeit sehr stark anisotrop ist.

Gegen plastische Verformung parallel zu der bei der Herstellung vorliegenden Hauptverformungsrichtung (Walz- und Reckrichtung, in Fig. 1 durch Pfeile symbolisiert) ist die Folie 1 vielfach fester als gegen plastische Verformung in der Ebene der Folie 1 quer zu der bei der Herstellung vorliegenden Hauptverformungsrichtung. Bei Verformung der Folie 1 durch Zugspannung parallel zu der bei der Herstellung vorherrschenden Hauptverformungsrichtung - also in ihrer Längsrichtung - beträgt die Bruchdehnung nur etwa ein Zwanzigstel von jenem Wert, den die Bruchdehnung hat, wenn die Verformung der Folie 1 durch Zugspannung in der Folienebene normal zu der bei der Herstellung vorherrschenden Hauptverformungsrichtung liegt. (Die Bruchdehnung bei Verformung in Längsrichtung der Folie 1 liegt im Bereich von 12 bis 15%; bei Verformung quer dazu liegt sie bei etwa 300%.)

Die strichlierten Linien in Fig. 1 symbolisieren gerade Schnittlinien 8 durch welche die Folie 1 erfindungsgemäß in längliche Streifen geschnitten wird, welche die herzustellenden Dichtungsstreifen 9 sind. Von erfindungsgemäß wesentlicher Bedeutung ist, dass die Schnittlinien 8 normal zur Bewegungsrichtung des Stranges 2, 5 bzw. der Folie 1 auf dem durch Walzenpaare 3, 4 und Rollen 6, 7 gebildeten Kalanderwalzgerüst liegen.

Für das Bilden einer dichten Gewindeverbindung - etwa zwischen einem mit einem Schraubengewinde versehenen Rohrende und einer Muffe mit Mutterngewinde - wird ein Dichtungsstreifen 9, welcher ursprünglich mindestens etwa so lang ist wie der Umfang des Schraubengewindes, genommen, durch händisches Ziehen an seinen Enden auf das zweifache bis vierfache seiner vorherigen Länge plastisch verformt, dann von der Stirnseite des Mutterngewindes her auf dieses aufgewickelt, wobei er ständig unter leichter Zugspannung gehalten wird. Dort wo sich zwei Lagen des so auf das Gewinde aufgewickelten Dichtungsstreifens 9 berühren, haften die beiden Lagen ausreichend stark aneinander dass die Wicklung auch ohne Gleit- oder Klebemittel stabil hält. Wenn das Spiel zwischen Schrauben- und Mutterngewinde sehr groß ist, können problemlos auch deutlich mehr als zwei Lagen von Dichtungsstreifen 9 auf das Schraubengewinde aufgebracht werden um den Spalt zu überbrücken. Es können auch problemlos mehrere vorher getrennte Dichtungsstreifen 9 nacheinander und übereinander auf das Schraubengewinde aufgebracht werden.

Nach dem Fertigstellen der Wicklung von Dichtungsstreifen 9 auf dem Schraubengewinde, wird der Teil, welcher ein Mutterngewinde aufweist, auf das umwickelte Schraubengewinde aufgeschraubt. All diese Handlungen sind so einfach durchführbar, dass die Durchführung im Bedarfsfall auch von ungeübten Personen sofort beherrscht wird. Es ergibt sich verlässliche Dichtheit zwischen den miteinander verschraubten Teilen, auch wenn die Tiefe der Verschraubung eventuell nachjustiert werden muss und dazu die verschraubten Teile auch entgegengesetzt zur Einschraubrichtung gegeneinander verdreht werden müssen.

Die Materialeigenschaften des Dichtungsstreifens 9, durch welche diese Vorteile erzielt werden, werden durch die beschriebene, bei der Montage gezielt aufgebrachte Dehnung erreicht. Das Material des Dichtungsstreifens 9 wird durch diese Dehnung weich und geschmeidig und legt sich dadurch perfekt in die Gewindegänge und gewährleistet nach dem Verschrauben eine absolut dichte Gewindeverbindung.

Diese neuartige Technik ist universell einsetzbar, also für alle gängigen Gewindeverbindungen wie NPT- Gewinde, Rohrgewinde, Gewindefittinge, ohne zusätzliches Aufbringen von Gleitmittel.

Für die bei der Montage aufzubringende Dehnung des Dichtungsstreifens 9 gibt es keine eng eingegrenzte Vorgabe. Gute Ergebnisse sind jedenfalls erzielbar, wenn der Dichtungsstreifens 9 auf mindestens das Doppelte bis Vierfache seiner Ursprungslänge gestreckt wird.

An Größen von erfindungsgemäßen Dichtungsstreifen 9 haben sich bisher bewährt:
Dicke von 50 - 500µm,
Breite von 5 - 30 mm
Länge von 50 - 200mm (abhängig von der Gewindedimension)

Für die Dichte des unverformten Dichtungsstreifens 9 hat sich der Bereich von 1,20 - 1,80 g/cm³ gut bewährt.

Der erfindungsgemäß hergestellte Dichtungsstreifen braucht nicht unbedingt wie dargestellt ein ungeteiltes flächiges Stück zu sein. Es kann beispielsweise auch ein sogenanntes Multifilament sein, also ein aus vielen länglichen, schlankeren Streifen oder Fäden zusammengesetztes Gebilde. Es kann beispielsweise auch ein bündelartiges Gebilde sein, welches durch Aufschlitzen eines monolithischen Streifens gebildet ist. Entscheidend ist die beschriebene Abfolge von Verformungen. (Unmittelbar vor der Montage starke plastische Dehnung in Längsrichtung, welche die Wickelrichtung um das Gewinde ist, aber normal zu jener Richtung ist, in welcher das Material bei der Herstellung hauptsächlich verformt wurde.)

Ein bei der Montage oft erforderliches Nachjustieren der dichtenden Gewindeverschraubung bis zu einer viertel Umdrehung in beide Richtungen, ist sogar bei Edelstahlverbindungen möglich, ohne die Dichtheit zu gefährden.

Der erfindungsgemäß hergestellte Dichtungsstreifen verhindert auch das Verreiben der miteinander zu verschraubenden Teile, welches insbesondere bei Gewinden aus Edelstahlgefürchtet ist.

An (an sich bekannten) Vorteilen der Ausführung eines Dichtungsstreifens aus PTFE ohne weiteren Zusatzstoffen, seien kurz aufgezählt:
- Ausgezeichneten Gleiteigenschaften, sehr niedriger Gleitreibungskoeffizient
- Hervorragende chemische Beständigkeit
- Temperatureinsatzbereich von -200°C bis +260 °C
- keine Wasseraufnahme
- alterungsbeständig
- keine Aushärtung, Versprödung oder Ähnliches.
- Keinerlei chemische Reaktionen mit den in Leitungen befindlichen Medien.

Anwendungsversuche zeigten, dass für Stickstoff als Druckfluid vorgesehene Fittings und Rohrleitungsgewinde aus Edelstahl, welche mit erfindungsgemäß hergestellten Dichtungsstreifen gedichtet wurden, Drücken bis 200 bar und darüber problemlos standhalten. Wasserleitungsfittings die mit erfindungsgemäß hergestellten Dichtungsstreifen gedichtet wurden, halten 25 bar problemlos stand. In beiden Fällen ist Dichtheit auch dann noch gegeben, wenn Gewindeverbindungen mehrere Male um eine Vierteldrehung aufgeschraubt und wieder zugeschraubt werden.

Die schnelle und einfache Art der Anwendung ist ein großer Vorteil für Monteure. Die Fehleranfälligkeit sinkt damit drastisch.

## Patentansprüche

1. Verfahren für die Herstellung von Dichtungsstreifen (9) für das Abdichten von Gewindeverbindungen, indem PTFE zu einer Folie (1) gewalzt wird, wobei die durch Walzen gebildete Folie (1) entlang von Schnittlinien (8), welche in der Ebene der Folie (1) zumindest annähernd normal zur Richtung des Walzens liegen, in längliche Streifen geschnitten wird, deren Längsrichtung zumindest annähernd normal zur Richtung des Walzens an der Folie (1) liegt.

2. Verfahren nach Anspruch 1, **dadurch gekennzeichnet, dass** ein als Multifilament ausgebildeter Dichtungsstreifen gebildet wird, indem ein nach Anspruch 1 hergestellter monolithischer Dichtungsstreifen durch mehrere Längsschlitze in ein Bündel von schlankeren Streifen geteilt wird.

## Claims

1. Process for the production of sealing strips (9) for sealing threaded connections by rolling PTFE into a film (1), whereby the film (1) formed by rolling is cut along cutting lines (8), which, in the plane of the film (1), are at least approximately normal to the direction of rolling, into elongated strips, the longitudinal direction of which is at least approximately normal to the direction of rolling on the film (1).

2. Process according to claim 1, **characterised in that** a sealing strip designed as a multifilament is formed by dividing a monolithic sealing strip produced according to claim 1 through multiple longitudinal slits into a bundle of slimmer strips.

## Revendications

1. Procédé pour fabriquer des bandes d'étanchéité (9) pour étanchéifier des raccords filetés en laminant du PTFE en une feuille (1), la feuille (1) formée par laminage étant découpée en bandes allongées le long de lignes de découpe (8) qui s'étendent dans le plan de la feuille (1) au moins approximativement perpendiculairement par rapport au sens de laminage, le sens longitudinal de ces bandes étant au moins approximativement perpendiculaire par rapport au sens de laminage sur la feuille (1).

2. Procédé selon la revendication 1, **caractérisé en ce qu'**il est formé une bande d'étanchéité réalisée sous la forme de multifilaments par séparation d'une bande d'étanchéité monolithique fabriquée conformément à la revendication 1 en un ensemble de bandes plus fines par le biais de plusieurs fentes longitudinales.
